# EUROPEAN PATENT APPLICATION

(11) **EP 4 492 557 A1**
(43) Date of publication of application: **15.01.2025**
(21) Application number: 22930475.3
(22) Date of filing: 09.06.2022
(51) Int. Cl.: H01M 50/449, H01M 50/409, H01M 50/403, H01M 10/0525

(54) **COATING FOR BATTERY SEPARATOR, PREPARATION METHOD THEREFOR, BATTERY SEPARATOR, AND BATTERY**

(30) Priority: 07.03.2022 CN 202210224515
(71) Applicant: Shenzhen Senior Technology Material Co., Ltd., Shenzhen, Guangdong 518106 (CN)
(72) Inventor: WANG, Yanjie, Shenzhen, Guangdong 518106 (CN); CHEN, Zelin, Shenzhen, Guangdong 518106 (CN); SUN, Hua, Shenzhen, Guangdong 518106 (CN); SHEN, Jianqiang, hangzhou, Jiangsu 213100 (CN); TAN, Bin, Shenzhen, Guangdong 518106 (CN)
(74) Representative: PPR AG
(86) International application number: PCT/CN2022/097847
(87) International publication number: WO 2023/168846

(57) **Abstract**

The present invention provides a coating for battery separator, a preparation method thereof, a battery separator and a battery, where a coating slurry of the coating for the battery separator includes a dispersion medium, a nanomaterial, and a polymer containing polar functional groups; the coating has a surface pore size of 10 nm-30 nm, and a surface roughness of 200 nm-500 nm, and the coating has a hydroxyl content of 100 mg KOH/g-4000 mg KOH/g. The coating for battery separator, the preparation method thereof, the battery separator and the battery can solve a problem of deformation of battery separators due to the induction of electrolyte solutions.

## Description

### TECHNICAL FIELD

The present invention relates to the field of batteries, and in particular, to a coating for battery separator, a preparation method thereof, a battery separator, and a battery.

### BACKGROUND

Lithium battery separator is one of core components of lithium ion batteries, and its performance has a very important impact on the overall performance of lithium batteries, which is one of key technologies restricting the development of lithium batteries. With the continuous expansion of the application field of lithium batteries and the deepening influence of lithium battery products in people's lives, people have higher and higher requirements for performances of lithium batteries. In order to meet the development requirements of lithium batteries, the separator, as an important component of lithium batteries, should not only have good chemical stability and low manufacturing cost, but also improve the safety performance of lithium batteries, which is also an important trend in the development of lithium-ion batteries.

At present, separator used in lithium-ion batteries is polyolefin, which has poor wettability to electrolyte solutions. Therefore, after a battery is assembled and an electrolyte solution is injected into a semi-finished product, since the electrolyte solution cannot quickly spread on a surface of the polyolefin separator, the separator will deform and wrinkle under an action of the surface tension of the electrolyte solution, thereby forming dead areas inside the lithium battery, thus affecting the battery

### SUMMARY

The present invention provides a coating for battery separator and a preparation method thereof, a battery separator, and a battery, so as to improve a problem of deformation of battery separators due to the induction of electrolyte solutions.

According to a first aspect of the present invention, the present invention provides a coating for battery separator, where the coating is formed from a coating slurry, including a dispersion medium, a nanomaterial, and a polymer containing polar functional groups; the coating has a surface pore size of 10 nm-30 nm, and a surface roughness of 200 nm-500 nm, and the coating has a hydroxyl content of 100 mg KOH/g-4000 mg KOH/g.

In some embodiments, the dispersion medium and the nanomaterial form a dispersion liquid, and the nanomaterial has a content of 0.1 wt%-30 wt% in the dispersion liquid based on a mass of the dispersion liquid.

In some embodiments, the nanomaterial includes at least one of a nanoparticle and a one-dimensional nanomaterial, the nanoparticle has a particle size of less than 150 nm; the one-dimensional nanomaterial has a length-diameter ratio of ≤50, and a length of ≤1000 nm.

In some embodiments, the nanomaterial includes one or more of aluminum oxide, boehmite, magnesium hydroxide, magnesium oxide, barium sulfate, calcium carbonate, aluminum nitride, silicon carbide, hydroxyapatite, nanocellulose, attapulgite, an aramid resin, polymethyl methacrylate, polyvinylidene fluoride, and polyethylene oxide.

In some embodiments, the polymer containing polar functional groups includes polyacrylic acid, polyvinyl alcohol, carboxymethyl cellulose, or combinations thereof.

In some embodiments, the polymer containing polar functional group is added in an amount of 1 wt%-30 wt% of the nanomaterial.

In some embodiments, the dispersion medium has a water content of 90 wt% or more.

According to a second aspect of the present invention, the present invention provides a preparation method of a coating for battery separator, which is used for preparing the aforementioned coating for battery separator, the method including:
dispersing a nanomaterial in a dispersion medium to form a dispersion liquid;
adding a polymer containing polar functional groups to the dispersion liquid to form a slurry;
adding an etchant or a water extractive agent into the slurry to form a coating slurry;
coating the coating slurry onto a base membrane by means of a coating method, and drying the base membrane with the coating slurry to obtain a coated separator;
performing a radiation treatment on the coated separator, where the etchant in the coated separator reacts to generate gas, the coated separator is thus etched to form a coating having a rough surface; or immersing the coated separator in water, where the water extractive agent in the coated separator is precipitated into the water, thus pits on a surface of the coated separator are left after extraction of the water extractive agent so as to form the coating having the rough surface.

In some embodiments, the etchant includes low molecular weight polyethylene, low molecular weight polypropylene, or combinations thereof.

In some embodiments, the low-molecular weight polyethylene has a molecular weight of less than 10000 g/mol, and the low-molecular weight polypropylene has a molecular weight of less than 10000 g/mol.

In some embodiments, the radiation treatment includes ultraviolet radiation or plasma radiation.

In some embodiments, the ultraviolet radiation has an ultraviolet wavelength of 100 nm-300 nm, a power of 30 W/cm-100 W/cm, and an irradiation time of 0.01 s-5 s.

In some embodiments, the base membrane is a polyolefin base membrane, and the base membrane has a thickness of 3 microns-30 microns, a drying temperature of 40 °C-130 °C, and a coating speed of 10 m/min-200 m/min.

In some embodiments, the water extractive agent is a polymer nanoparticle, including polymethyl methacrylate, polyvinylidene fluoride, or combinations thereof; and the polymer nanoparticle has a diameter of 100 nm-500 nm, and an amount of 5 wt%-20 wt% of the nanomaterial.

In some embodiments, the coated separator is immersed in water for 1 min-5 min.

In some embodiments, the coating method includes at least one of spraying, dip coating, dimple roller coating, printing coating, extrusion coating, and wire bar coating.

According to a third aspect of the present invention, the present invention provides a battery separator, where a surface of the battery separator has the aforementioned coating for battery separator, or has the coating for battery separator prepared by the aforementioned preparation method.

According to a fifth aspect of the present invention, the present invention provides a battery, including the aforementioned battery separator.

According to the coating for battery separator, the preparation method thereof, the battery separator and the battery provided by the present invention, the wettability of the battery separator, and the efficiency of ion transportation are improved by the synergistic treatment of the number of hydroxyl functional groups, surface pore size and surface roughness of the coating.

### BRIEF DESCRIPTION OF DRAWINGS

In order to explain embodiments of the present invention or the technical solutions in the prior art more clearly, the following will make a brief introduction to the drawings needed for describing the embodiments or the prior art. Apparently, the drawings in the following description are merely some embodiments of the present invention, and persons of ordinary skill in the art may still derive other drawings from these accompanying drawings without creative effort.
FIG. 1 is a schematic flow chart of a preparation method of a coating for battery separator according to an embodiment.
FIG. 2 is a schematic flow chart of a preparation method of a coating for battery separator according to another embodiment.

### DESCRIPTION OF EMBODIMENTS

The technical solutions in embodiments of the present invention will be described clearly and comprehensively below. Apparently, the described embodiments are merely a part rather than all embodiments of the present invention. All other embodiments obtained by persons of ordinary skill in the art based on embodiments of the present invention without creative effort shall fall within the protection scope of the present invention.

The inventors find that if the surface of a polyolefin separator is coated with a ceramic material, such as alumina, boehmite, etc., the ceramic material has excellent wettability to electrolyte solutions, so that the wettability of the coated separator to electrolyte solutions may be improved. However, the ceramic material is generally at micron or submicron scale, pores formed between micron ceramic particles have a size of micron scale, and there are large gaps at the side in contact with the separator. An electrolyte solution is transferred along the ceramic surface, resulting in insufficient coverage of micron-scale pores, thereby leading to the existence of areas not covered by the electrolyte solution in micron-scale pores, thus also forming dead areas. Therefore, the effective ion transportation channels of the separator are reduced, and the ion transportation rate is reduced. In order to reduce the influence of the deformation of battery separators caused by the injection of electrolyte solutions, the present invention provides a coating for battery separator with an affinity to electrolyte solutions.

The technical solutions of the present invention are described in detail below with specific embodiments. The following specific embodiments may be combined with each other, and the same or similar concepts or processes may not be repeated in certain embodiments.

A specific embodiment of the present invention provides a coating for battery separator, where a coating slurry of the coating includes a dispersion medium, a nanomaterial, and a polymer containing polar functional groups; the coating has a surface pore size of 10 nm-30 nm, and a surface roughness of 200 nm-500 nm, and the coating has a hydroxyl content of 100 mg KOH/g-4000 mg KOH/g. The surface pore size of the coating may be any one of 10 nm, 11 nm, 12 nm, 13 nm, 14 nm, 15 nm, 16 nm, 17 nm, 18 nm, 19 nm, 20 nm, 21 nm, 22 nm, 23 nm, 24 nm, 25 nm, 26 nm, 27 nm, 28 nm, 29 nm, 30 nm, or a range between any two thereof. The surface roughness may be 200 nm, 300 nm, 400 nm, 500 nm. The hydroxyl content in the coating may be any one of 100 mg KOH/g, 500 mg KOH/g, 1000 mg KOH/g, 1500 mg KOH/g, 2000 mg KOH/g, 2500 mg KOH/g, 3000 mg KOH/g, 3500 mg KOH/g, 4000 mg KOH/g, or a range between any two thereof. With the change of selected coating slurry materials in combination with tests, corresponding values may be selected and changed.

The dispersion medium may be any liquid that may be used for material dispersion, water content in the dispersion medium is 90 wt% or more, and in addition, a dispersion medium such as ethanol, acetone, and N-methylpyrrolidone may be included.

The dispersion medium and the nanomaterial form a dispersion liquid, and the nanomaterial has a content of 0.1 wt%-30 wt% in the dispersion liquid based on a mass of the dispersion liquid. For example, the content may be any one of 0.1 wt%, 0.5 wt%, 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, 30 wt%, or a range between any two thereof. In some embodiments, the nanomaterial includes at least one of a nanoparticle and a one-dimensional nanomaterial. The ceramic nanoparticles have a particle size of less than 150 nm, and preferably ≤ 100nm; the one-dimensional nanomaterial has a length-diameter ratio of ≤50, and a length of ≤1000 nm.

The nanomaterial includes one or more of aluminum oxide, boehmite, magnesium hydroxide, magnesium oxide, barium sulfate, calcium carbonate, aluminum nitride, silicon carbide, hydroxyapatite, nanocellulose, attapulgite, aramid resin, polymethyl methacrylate, polyvinylidene fluoride and polyethylene oxide.

The polymer containing polar functional groups includes polyacrylic acid, polyvinyl alcohol, carboxymethyl cellulose, or combinations thereof. In some embodiments, an addition amount of the polymer containing polar functional groups is 1 wt%-30 wt% of the nanomaterial, for example, which is any one of 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, 30 wt%, or a range between any two thereof.

Based on the research on coatings, the inventors find that, after the pore size of the coating is reduced, the size of gaps at the contact interface between the nanomaterial coating and the separator may be effectively reduced, thereby solving the problem of the existence of dead areas. In addition, since the surface pore size of the coating is reduced, the resistance for the electrolyte solution to enter the coating is increased, thus there is a need to add polar groups to ensure the wettability thereof. However, when the hydroxyl content is too high, the electrolyte solution will form a dense liquid and thus cannot enter the coating. Therefore, there is a synergistic relationship between the pore size and the number of polar groups of the coating. The coating provided by the present application has a certain amount of hydroxyl groups to ensure that the coating has an affinity to the electrolyte solution; nano-scale pore channels of the coating have capillary effect to ensure that the electrolyte solution can be adsorbed; and a certain amount of hydroxyl groups and the nano-scale pore channels of the coating, when further being in cooperation with a certain degree of roughness of the coating, ensure that the electrolyte solution has good diffusibility and is adsorbed to the greatest extent, so that the impact of the electrolyte solution on the separator is alleviated. For the first time, according to the present application, pore size, surface roughness and the number of hydroxyl groups of the coating are combined together to improve the wettability of the separator, and improve efficiency of ion transportation.

In order to obtain the aforementioned coating for battery separator, embodiments of the present invention further provide a preparation method of a coating for battery separator, for preparing the aforementioned coating for battery separator.

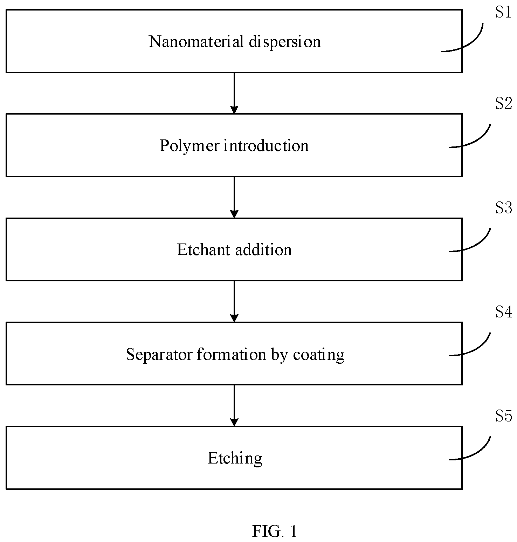

Referring to FIG. 1, in one embodiment, a preparation method of a coating for battery separator includes the following steps.

S1, nanomaterial dispersion: a nanomaterial is fully dispersed in a dispersion medium to form a dispersion liquid. The dispersion medium may be any liquid that may be used for material dispersion. The dispersion medium has a water content of 90 wt% or more, and in addition, a dispersion medium such as ethanol, acetone, and N-methylpyrrolidone may be included. The dispersing of the nanomaterial is performed by means of high-speed stirring, high-pressure homogenization, sand-milling dispersion, etc., so as to make the nanomaterial uniformly disperse in the dispersion medium. The nanomaterial has a content of 0.1 wt%-30 wt% in the dispersion liquid. The nanomaterial includes at least one of a nanoparticle and a one-dimensional nanomaterial. The nanoparticle has a particle size of less than 150 nm. The one-dimensional nanomaterial has a length-diameter ratio of ≤50, and a length of ≤1000 nm.

S2, polymer introduction: a polymer containing polar functional groups, such as polyacrylic acid, polyvinyl alcohol, carboxymethyl cellulose, etc., is introduced into the above dispersion liquid to form a slurry. The polymer containing polar functional groups is added in an amount of 1 wt%-30 wt% based on a mass of the nanomaterial.

S3, etchant addition: an etchant is added into the above slurry to form a coating slurry. The etchant includes low molecular weight polyethylene, low molecular weight polypropylene, or combinations thereof. The low-molecular weight polyethylene or the low-molecular weight polypropylene has a molecular weight of less than 10000 g/mol.

S4, separator formation by coating: the prepared coating slurry is coated on a base membrane by a coating method, and then the latter is dried to obtain a coated separator. The coating method includes spraying, dip coating, dimple roller coating, printing coating, extrusion coating and wire bar coating, and other existing coating methods may also be selected. The base membrane is a polyolefin base membrane, and the base membrane has a thickness of 3 microns-30 microns, a drying temperature of 40 °C-130 °C, and a coating speed of 10 m/min-200 m/min.

S5, etching: a radiation treatment is performed on the above coated separator, an etchant reacts to generate gas, and then the coated separator is etched to form a coating having a rough surface. The radiation treatment may be ultraviolet radiation, plasma radiation, etc. A wavelength of ultraviolet light is in a range of 100 nm-300 nm, a power is in a range of 30 W/cm-100 W/cm, and an irradiation time is in a range of 0.01 s-5 s.

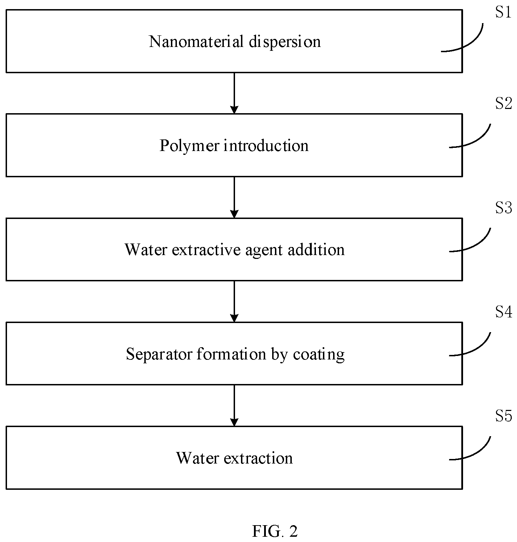

Referring to FIG. 2, in another embodiment, the present invention further provides another preparation method of a coating for battery separator, including the following steps.

S1, nanomaterial dispersion: a nanomaterial is fully dispersed in a dispersion medium to form a dispersion liquid. The dispersion medium may be any liquid that may be used for material dispersion. The dispersion medium has a water content of 90 wt% or more, and in addition, a dispersion medium such as ethanol, acetone, and N-methylpyrrolidone may be included. The dispersing of the nanomaterial is performed by means of high-speed stirring, high-pressure homogenization, sand-milling dispersion, etc., so as to make the nanomaterial uniformly disperse in the dispersant. The nanomaterial has a content of 0.1 wt%-30 wt% in the dispersion liquid. The nanomaterial includes at least one of a nanoparticle and a one-dimensional nanomaterial. The nanoparticle has a particle size of less than 150 nm. The one-dimensional nanomaterial has a length-diameter ratio of ≤50, and a length of ≤1000 nm.

S2, polymer introduction: a polymer containing polar functional groups, such as polyacrylic acid, polyvinyl alcohol, carboxymethyl cellulose, etc., is introduced into the above dispersion liquid to form a slurry. The polymer containing polar functional groups is added in an amount of 1 wt%-30 wt% based on a mass of the nanomaterial.

S3, water extractive agent addition: a water extractive agent is added into the above slurry to form a coating slurry. The affinity between the water extractive agent and ceramic particles is weak, and when in water, the water extractive agent is preferentially eluted, leaving pits on a surface of a coated separator after extraction to form a coating with a rough surface. In some embodiments, a polymer nanoparticle, such as polymethyl methacrylate, polyvinylidene fluoride, or combinations thereof, may be selected as the water extractive agent. The nanoparticle has a diameter of 100 nm-500 nm, and is used in an amount of 5 wt%-20 wt% based on a weight of ceramic particles.

S4, separator formation by coating: the prepared coating slurry is coated on a base membrane by a coating method, and then the latter is dried to obtain a coated separator. The coating method includes spraying, dip coating, dimple roller coating, printing coating, extrusion coating and wire bar coating, and other existing coating methods may also be selected. The base membrane is a polyolefin base membrane, and the base membrane has a thickness of 3 microns-30 microns, a drying temperature of 40°C-130 °C, and a coating speed of 10 m/min-200 m/min.

S5, water extraction: the coated separator is immersed in water. The water extractive agent in the coated separator is precipitated into the water, leaving pits on a surface of the coated separator after extraction to form a coating having a rough surface. The coated separator is immersed in water for 1 min-5 min.

Product performances of some examples and comparative examples of the present invention were analyzed through experiments as follows.

With reference to Table 1, separators of Examples 1-8 and Comparative Examples 1-10 in Table 1 were prepared and tested for performances in the following manner.

### I. Separator preparation

Base membranes: base membranes used in Examples 1 to 8 and Comparative Examples 1 to 10 were polyethylene membranes with a thickness of 5 µm, a porosity of 40%, and a pore size of 40 nm.

Separators: separators were prepared by the etching method shown in FIG. 1, specifically including:

S1, nanomaterial dispersion: a nanomaterial was fully dispersed in a dispersion medium to form a dispersion liquid. The dispersion medium was water.

S2, polymer introduction: a polymer containing polar functional groups was introduced into the above dispersion liquid to form a slurry.

S3: etchant addition: an etchant was added into the above slurry to form a coating slurry.

S4, separator formation by coating: the prepared coating slurry was coated on a base membrane by a coating method, and then the latter was dried to obtain a coated separator.

S5, etching: a radiation treatment was performed on the above coated separator, the etchant reacted to generate gas, and then the coated separator was etched to form a coating having a rough surface.

The preparation parameters of respective examples and comparative examples were shown in Table 1.

### II. Test of liquid absorption rate for electrolyte solution:

1. Test method of liquid absorption rate of base membrane: (1) cutting a base membrane sample with a size of 150mm*150mm (S=0.0225 m²), weighing the sample, and recording the mass mi; (2) immersing the sample completely in an electrolyte solution (EC: EMC = 7:3 vol%, LiFP₆ 1mol) for 1h; (3) laying a layer of clean paper towel (with an area greater than 150mm*150mm) on a flat table, taking out the sample and placing it on the paper towel, gently wiping the free electrolyte solution on the surface of the base membrane with another clean paper towel, and then wiping it with yet another clean paper towel until no granular electrolyte solution could be seen to the naked eye; (4) weighing the dried sample mass m₂, and calculating the liquid absorption rate (unit: g/m²), and the surface liquid absorption rate as (m₂-m₁)/S.
2. Test method of liquid absorption rate of a coating for electrolyte solution: testing liquid absorption rates of a base membrane and a composite separator (i.e., the base membrane with a coating) respectively according to the method in 1, and subtracting the two liquid absorption rates to obtain a liquid absorption rate of the coating for the electrolyte solution.

### III. Diffusion speed of electrolyte solution on separator surface:

(1) placing a glass slide under an optical microscope, cutting a 50mm*50mm separator sample, marking the MD/TD direction, and fixing the sample on the glass slide with an adhesive tape.
(2) taking 2 µL of an electrolyte solution (EC: EMC = 7:3 vol%, LiFP₆ 1mol), dropping it on the fixed sample, and pressing a timer at the same time, then recording the diffusion time t (s) when the droplet stopped diffusing, and recording the morphology of the diffused droplet with the optical microscope.
(3) calculating an equivalent radius R (mm) of the diffused droplet by using a computer analysis software, and calculating a diffusion speed V (mm/s) according to the formula: V=R/t.
(4) repeating the above experiments three times to calculate the mean value of diffusion speed.

### IV Parameter measurement and evaluation:

Refer to GB/T 12008. 3-2009 for the test method of hydroxyl content.

Pore size of the surface of the coating was measured by high-resolution scanning electron microscopy.

Surface roughness was measured by 3D surface profilometer.

How to measure the deformation degree, and what was called no deformation, deformation, large deformation and serious deformation. Test for wrinkling due to liquid injection: assembling a separator with positive and negative electrodes into a battery, then injecting an electrolyte solution, and standing for a period of time, disassembling the battery to check the deformation of the separator. If there was no wrinkle, this was called as no deformation; if there were wrinkles and the number of wrinkles was less than 3, this was called as deformation; if the number of wrinkles was more than 3 and less than 10, this was called as large deformation; if the number of wrinkles was no less than 10, this was called as serious deformation.

V Test results and analysis: The data obtained from the tests were shown in Table 1 below.

**Table 1**

| | Type, size and content relative to solvent of nanomaterial | Type and content relative to nanomaterial of polymer | Roughness control mode and condition | -OH content (mg KOH/g) | Pore size of surface of coating (nm) | Surface roughness (nm) | Liquid absorption rate of coating to electrolyte solution (g/m²) | Diffusion velocity of electrolyte solution on separator surface (mm/s) | Deformation degree due to electrolyte solution after solution injection |
|---|---|---|---|---|---|---|---|---|---|
| Example 1 | Aluminum oxide; 100 nm; 20% | Polyacrylic acid; 5% | Water extraction; polyvinylidene fluoride with a diameter of 200 nm; 10 wt% of nanomaterial | 100 | 20 | 300 | 1 | 6 | No deformation |
| Example 2 | Aluminum oxide; 100 nm; 20% | Polyacrylic acid; 5% | Water extraction; polyvinylidene fluoride with a diameter of 200 nm; 10 wt% of nanomaterial | 1000 | 20 | 300 | 2 | 10 | No deformation |
| Example 3 | Aluminum oxide; 100 nm; 20% | Polyacrylic acid; 5% | Water extraction; polyvinylidene fluoride with a diameter of 200 nm; 10 wt% of nanomaterial | 3000 | 20 | 300 | 1.4 | 10 | No deformation |
| Example 4 | Aluminum oxide; 100 nm; 20% | Polyacrylic acid; 5% | Water extraction;polyvi nylidene fluoride with a diameter of 200 nm; 10 wt% of nanomaterial | 4000 | 20 | 300 | 0.6 | 10 | No deformation |
| Example 5 | Boehmite; 30 nm; 20% | Polyvinyl alcohol; 5% | Etching; polypropylene 6000g/mol; UV power 150 W, 2s | 1000 | 10 | 300 | 1 | 10 | No deformation |
| Example 6 | Aluminum oxide; 70 nm; 20% | Polyvinyl alcohol; 5% | Etching; polypropylene 6000g/mol; UV power 150 W, 2s | 1000 | 30 | 300 | 1.2 | 10 | No deformation |
| Example 7 | Hydroxyapatit e; length- | Polyacrylic acid; 5% | Water extraction; polyvinylidene | 1000 | 20 | 300 | 2 | 10 | No deformation |
| | diameter ratio 20, length 500 nm;10% | | fluoride with a diameter of 200 nm; 10 wt% of nanomaterial | | | | | | |
| Example 8 | Nanocellulose fiber; length-diameter ratio 20, length 500 nm;10% | Polyacrylic acid; 5% | Water extraction; polyvinylidene fluoride with a diameter of 600 nm; 10 wt% of nanomaterial | 1000 | 20 | 500 | 1 | 8 | No deformation |
| Comparative Example 1 | Aluminum oxide; 100 nm; 20% | Polyacrylic acid; 5% | Water extraction; polyvinylidene fluoride with a diameter of 200 nm; 10 wt% of nanomaterial | 50 | 20 | 300 | 0.5 | 4 | Deformation |
| Comparative Example 2 | Aluminum oxide; 100 nm; 20% | Polyacrylic acid; 5% | Water extraction; polyvinylidene fluoride with a diameter of 200 nm; 10 wt% of nanomaterial | 4500 | 20 | 300 | 0.3 | 10 | Deformation |
| Comparative Example 3 | Aluminum oxide; 100 nm; 20% | Polyacrylic acid; 5% | Water extraction; polyvinylidene fluoride with a diameter of 200 nm; 20 wt% of nanomaterial | 4500 | 20 | 1000 | 1.6 | 10 | Serious deformation |
| Comparative Example 4 | Magnesium oxide; 10 nm; 20% | Polyvinyl alcohol; 5% | Etching; polypropylene 6000g/mol; UV power 150 W, 2s | 1000 | 5 | 300 | 0.5 | 10 | Deformation |
| Comparative Example 5 | Magnesium oxide; 200 nm; 20% | Polyvinyl alcohol; 5% | Etching; polypropylene 6000g/mol; UV power 150 W, 2s | 1000 | 50 | 300 | 0.5 | 10 | Deformation |
| Comparative Example 6 | Attapulgite; length-diameter ratio 20, length500 nm;10% | Polyacrylic acid; 5% | Water extraction; polyvinylidene fluoride with a diameter of 100 nm; 5 wt% of nanomaterial | 1000 | 20 | 100 | 0.3 | 10 | Large deformation |
| Comparative Example 7 | Attapulgite; length- | Polyacrylic acid; 5% | Water extraction; polyvinylidene | 1000 | 20 | 800 | 0.5 | 2 | Deformation |
| | diameter ratio 20, length500 nm;10% | | fluoride with a diameter of 1000 nm; 10 wt% of nanomaterial | | | | | | |
| Comparative Example 8 | Aluminum oxide; 100 nm; 20% | Polyacrylic acid; 5% | Water extraction; polyvinylidene fluoride with a diameter of 200 nm; 20 wt% of nanomaterial | 1000 | 20 | 1000 | 0.3 | 1 | Large deformation |
| Comparative Example 9 base membrane | | | | | 1000 | 200 | 0.1 | 0.1 | Serious deformation |
| Comparative Example 10 Ceramic coated membrane | Aluminum oxide; 1000nm;40% | Polyacrylic acid; 5% | / | 15 | 1000 | 2000 | 0.3 | 1 | Large deformation |

It can be seen from the comparison of Examples 1-4 and Comparative Examples 1-2 that when -OH content increased, the diffusion rate of the electrolyte solution gradually increased and then remained unchanged. The reason for this phenomenon was that the increase of -OH helped the diffusion of the electrolyte solution on the surface, but when -OH content was too much, the diffusion rate of the electrolyte solution reached the limit. When -OH content was 50 mg KOH/g, the separator was deformed. When -OH content was increased to 100 mg KOH/g, the separator was no longer deformed and was not deformed in a range of 100 mg KOH/g-4000 mg KOH/g. When -OH content was further increased to 4500 mg KOH/g, the coated separator began to deform. The reason for this phenomenon was that when the hydroxyl content was less than 100 mg KOH/g, the wettability of the coating to the electrolyte solution was insufficient, so the absorption rate of the coated separator to the electrolyte solution was relatively low, and the separator was deformed. When the hydroxyl content was more than 4000 mg KOH/g, the coating had super strong adsorption to the electrolyte solution, and then a layer of dense electrolyte solution liquid was formed on the surface of the coating, resulting in that the electrolyte solution is not able to enter pores of the coating smoothly, so the electrolyte solution accumulated on the surface of the separator, and the absorption rate of the coated separator to the electrolyte solution was relatively low (the absorption rate of the coated separator to the electrolyte solution was decreased in Example 4 and Comparative Example 2), thereby resulting in deformation of the separator. As the surface roughness further increased, and the liquid accumulated more on the separate surface, the impact of the increased electrolyte solution on the coated separator was enhanced, so that the coated separator was seriously deformed, as shown in Comparative Example 3.

It can be seen from Examples 5-6 and Comparative Examples 4-5 that when the pore size of the surface layer was less than 10 nm or more than 30 nm, the injection of the electrolyte solution caused the separator to deform, whereas in the range of 10 nm-30 nm, the shape of the separator remained unchanged. This was mainly due to that when the pore size was too small, the resistance for the electrolyte solution to enter the coating was large, and in the range of 10 nm-30 nm, the capillary effect was strong. As the pore size continued to increase, the capillarity effect decreased. As a result, the electrolyte solution cannot be fully absorbed by the coating.

As can be seen from Examples 2, 8, and Comparative Examples 6 to 8, the coated separator effect had excellent resistance to deformation caused by the electrolyte solution when the roughness was 300 nm and 500 nm, whereas this characteristic deteriorated when the roughness was 100 nm, 800 nm, and 1000 nm. The main reason for this phenomenon was that if the roughness was too small, the electrolyte solution cannot be fully absorbed by the coating due to the limited area for absorbing the electrolyte solution; if the roughness was too large, the higher defect difference hindered the transportation and dispersion of the electrolyte solution, and the electrolyte solution cannot fully diffuse to surrounding areas, so the electrolyte solution accumulated on the separator surface in the form of liquid.

According to the present application, through the design, the coating has a certain amount of hydroxyl groups to ensure an affinity to the electrolyte solution, the nano-scale pore channels have capillary effect to ensure that the electrolyte solution can be adsorbed, and a certain degree of roughness can ensure that the electrolyte solution is adsorbed and transported to the greatest extent, thereby alleviating the impact of the electrolyte solution on the separator. The wettability of the separator and the ion transportation efficiency are improved by the synergistic cooperation of the pore size, the surface roughness and the hydroxyl content of the coating.

Embodiments of the present invention further provide a battery separator which is manufactured by the aforementioned preparation method.

Embodiments of the present invention further provide a battery including the battery separator involved in the above optional embodiments.

In the description of this specification, reference to the terms "an embodiment", "one embodiment", "a specific implementation", or "an example" means that particular features, structures, materials, or characteristics described in connection with this embodiment or example are included in at least one embodiment or example of the present invention. In this specification, schematic expressions of the above terms do not necessarily refer to the same embodiment or example. Moreover, the particular features, structure, materials, or characteristics described may be combined in any one or more embodiments or examples in a suitable manner.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that the technical solutions described in the foregoing embodiments may be modified or made equivalent substitutions to some or all technical features thereof; and these modifications and substitutions shall not cause the essence of the corresponding technical solutions to depart from the scope of the technical solutions of embodiments of the present invention.

## Claims

1. A coating for battery separator, wherein the coating is formed from a coating slurry, comprising a dispersion medium, a nanomaterial, and a polymer containing polar functional groups; the coating has a surface pore size of 10 nm-30 nm, and a surface roughness of 200 nm-500 nm, and the coating has a hydroxyl content of 100 mg KOH/g-4000 mg KOH/g.

2. The coating for battery separator according to claim 1, wherein the dispersion medium and the nanomaterial form a dispersion liquid, and the nanomaterial has a content of 0.1 wt%-30 wt% in the dispersion liquid based on a mass of the dispersion liquid.

3. The coating for battery separator according to claim 1, wherein the nanomaterial comprises at least one of a nanoparticle and a one-dimensional nanomaterial, the nanoparticle has a particle size of less than 150 nm; the one-dimensional nanomaterial has a length-diameter ratio of ≤50, and a length of ≤1000 nm.

4. The coating for battery separator according to any one of claims 1-3, wherein the nanomaterial comprises one or more of aluminum oxide, boehmite, magnesium hydroxide, magnesium oxide, barium sulfate, calcium carbonate, aluminum nitride, silicon carbide, hydroxyapatite, nanocellulose, attapulgite, an aramid resin, polymethyl methacrylate, polyvinylidene fluoride, and polyethylene oxide.

5. The coating for battery separator according to claim 1, wherein the polymer containing polar functional groups comprises polyacrylic acid, polyvinyl alcohol, carboxymethyl cellulose, or combinations thereof.

6. The coating for battery separator according to claim 1, wherein the polymer containing polar functional groups is added in an amount of 1 wt%-30 wt% of the nanomaterial.

7. The coating for battery separator according to claim 1, wherein the dispersion medium has a water content of 90 wt% or more.

8. A preparation method of the coating for battery separator according to any one of claims 1-7, comprising:
dispersing the nanomaterial in the dispersion medium to form the dispersion liquid;
adding the polymer containing polar functional groups to the dispersion liquid to form a slurry;
adding an etchant or a water extractive agent into the slurry to form a coating slurry;
coating the coating slurry onto a base membrane by means of a coating method, and drying the base membrane with the coating slurry to obtain a coated separator;
performing a radiation treatment on the coated separator, wherein the etchant in the coated separator reacts to generate gas, the coated separator is thus etched to form a coating having a rough surface; or immersing the coated separator in water, wherein the water extractive agent in the coated separator is precipitated into the water, thus pits on a surface of the coated separator are left after extraction of the water extractive agent so as to form the coating having the rough surface.

9. The preparation method of the coating for battery separator according to claim 8, wherein the etchant comprises low molecular weight polyethylene, low molecular weight polypropylene, or combinations thereof.

10. The preparation method of the coating for battery separator according to claim 9, wherein the low-molecular weight polyethylene has a molecular weight of less than 10000 g/mol, and the low-molecular weight polypropylene has a molecular weight of less than 10000 g/mol.

11. The preparation method of the coating for battery separator according to claim 8, wherein the radiation treatment comprises ultraviolet radiation or plasma radiation; and the ultraviolet radiation has an ultraviolet wavelength of 100 nm-300 nm, a power of 30 W/cm-100 W/cm, and an irradiation time of 0.01 s-5 s.

12. The preparation method of the coating for battery separator according to claim 8, wherein the base membrane is a polyolefin base membrane, and the base membrane has a thickness of 3 microns-30 microns, a drying temperature of 40°C-130 °C, and a coating speed of 10 m/min-200 m/min.

13. The preparation method of the coating for battery separator according to claim 8, wherein the water extractive agent is a polymer nanoparticle, comprising polymethyl methacrylate, polyvinylidene fluoride, or combinations thereof; and the polymer nanoparticle has a diameter of 100 nm-500 nm, and an amount of 5 wt%-20 wt% of the nanomaterial.

14. The preparation method of the coating for battery separator according to claim 8, wherein the coated separator is immersed in water for 1 min-5 min; and the coating method comprises at least one of spraying, dip coating, dimple roller coating, printing coating, extrusion coating, and wire bar coating.

15. A battery separator, wherein a surface of the battery separator has the coating for battery separator according to any one of claims 1-7, or has the coating for battery separator prepared by the method according to any one of claims 8-14.

16. A battery, comprising the battery separator according to claim 15.
